# FASCICULE DE BREVET EUROPEEN

(11) **EP 3 839 665 B1**
(45) Date de publication et mention de la délivrance du brevet: **25.03.2026**
(21) Numéro de dépôt: 19217405.0
(22) Date de dépôt: 18.12.2019
(51) Int. Cl.: G04G 21/04, G04R 20/26, G04G 5/00

(54) **PROCEDE DE REGLAGE D'UNE MONTRE ELECTRONIQUE**
EINSTELLVERFAHREN EINER ELEKTRONISCHEN UHR
METHOD FOR ADJUSTING AN ELECTRONIC WATCH

(43) Date de publication de la demande: 23.06.2021
(73) Titulaire: ETA SA Manufacture Horlogère Suisse, 2540 Grenchen (CH)
(72) Inventeur: LAGORGETTE, Pascal, 2502 Bienne (CH)
(74) Mandataire: ICB SA

(56) Documents cités:
- EP-A1- 3 249 475
- CH-A2- 712 176
- US-A1- 2017 255 170
- US-A1- 2018 246 473

## Description

### Domaine technique

La présente invention concerne le domaine technique des montres électroniques. L'invention concerne plus particulièrement un procédé de réglage d'une montre électronique par exemple une montre à quartz.

### Art antérieur

Les montres dites « connectées », aptes à communiquer avec un appareil électronique tel qu'un smartphone, se sont imposées ces dernières années dans le milieu horloger. Le réglage d'une telle montre peut s'effectuer manuellement, notamment via l'activation de boutons poussoirs, de couronnes et/ou de touches tactiles, ce qui est relativement contraignant pour l'utilisateur ou le service après-vente chargé du réglage. Par exemple, si la montre dispose d'un mécanisme à quantième perpétuel, le réglage de la position des éléments d'affichage analogiques du mécanisme de quantième perpétuel, et plus généralement le réglage du mécanisme de quantième perpétuel, peut s'effectuer en tirant et/ou tournant une couronne de la montre et/ou en pressant un ou des poussoirs de la montre. Ainsi, on sélectionne un type d'année (par exemple, bissextile) et on positionne correctement les différents éléments d'affichage, et plus généralement tous les éléments du mécanisme de quantième perpétuel. Non seulement ce procédé est fastidieux pour l'utilisateur, qui doit se rappeler et exécuter correctement toutes les opérations de réglage les unes après les autres, mais il induit en outre des risques d'erreurs et de décalages.

On connait aussi dans l'état de la technique le document CH712176A1 qui décrit une solution d'une implémentation complexe consistant en une méthode de réglage d'une pièce d'horlogerie essentiellement par des moyens optiques.

On comprend qu'il existe un besoin de trouver une solution, notamment qui ne présente pas les inconvénients de l'art antérieur.

### Résumé de l'invention

La présente invention a pour but de pallier ces inconvénients en proposant un procédé de réglage d'un mécanisme réalisant une fonction horlogère telle que le quantième perpétuel d'une montre électronique telle qu'une montre à quartz, qui soit simple, robuste et fiable.

A cet effet, l'invention concerne un procédé de réglage d'une montre électronique, selon la revendication 1.

Ce procédé présente l'avantage de pouvoir être mis en œuvre sans que l'utilisateur n'ait à effectuer de réglage complexe via des couronnes, boutons poussoirs ou touches tactiles par exemple. Le procédé peut nécessiter d'être amorcé, ce qui peut être réalisé soit manuellement via un appui sur un bouton poussoir ou un écran tactile de la montre ou de l'appareil électronique, soit automatiquement dès lors que la montre et l'appareil électronique sont à proximité l'un de l'autre.

Ce procédé présente également l'avantage de nécessiter très peu de matériel : un appareil portable de type smartphone avec une application mobile appropriée suffit à le mettre en œuvre. Le procédé ne requiert pas l'utilisation de matériel dédié tel qu'un capteur à brancher à un ordinateur, ni de matériel encombrant. N'importe quelle personne (par exemple un horloger) disposant d'un smartphone pourrait mettre en œuvre le procédé

Dans d'autres modes de réalisation :
- l'étape d'établissement de connexion comprend une sous-étape d'initiation d'une connexion entre la montre et l'appareil électronique dès lors que cette montre est localisée relativement à l'appareil électronique à une distance autorisant l'établissement d'une connexion ;
- l'étape de vérification comprend une sous-étape de comparaison des données d'état avec des paramètres de réglage ;
- la montre comportant un mécanisme de quantième perpétuel et des moyens de positionnement d'éléments dudit mécanisme, le microcontrôleur de la montre étant configuré pour commander lesdits moyens de positionnement, l'étape de configuration comprenant un actionnement des moyens de positionnement des éléments du mécanisme de quantième perpétuel de façon à positionner lesdits éléments dans une position correspondant aux paramètres de réglage, et
- l'appareil électronique étant un smartphone.

L'invention concerne aussi un système de réglage de la montre électronique, selon la revendication 6.

### Brève description des figures

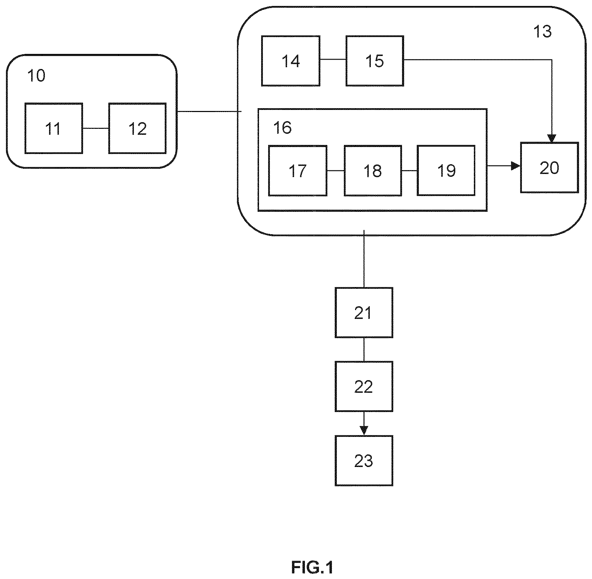

Les buts, avantages et caractéristiques de l'invention apparaîtront plus clairement dans la description détaillée suivante d'au moins une forme de réalisation de l'invention donnée uniquement à titre d'exemple non limitatif et illustrée sur la figure 1 qui représente schématiquement des étapes du procédé de réglage d'une montre électronique telle qu'une montre à quartz.

### Description détaillée d'un mode de réalisation

Dans un mode réalisation illustré sur la figure 1, l'invention porte sur un procédé de réglage d'une montre électronique telle qu'une montre à quartz, à partir d'un appareil électronique portable ou mobile. Autrement dit, cette montre et l'appareil électronique portable permet de mettre en œuvre un tel procédé. Un tel procédé est apte à réaliser le réglage d'un mécanisme réalisant une fonction horlogère telle que le quantième perpétuel d'une montre à quartz. Ces fonctions horlogères peuvent aussi comprendre la date, le jour, le mois l'année en cours, la phase de lune en cours, etc...

Ce procédé est mis en œuvre par un système de réglage d'une montre comprenant un appareil électronique portable qui est apte à se connecter à ladite montre à partir d'une technologie de communication en champ proche. Dans ce contexte, cette montre du système comprend alors de manière non limitative et non exhaustive :
- un module de communication en champ proche en particulier un module de communication en champ proche blindé comme on le verra par la suite ;
- un microcontrôleur configuré pour échanger des signaux électriques avec le module de communication en champ proche ;
- un organe régulateur tel qu'un oscillateur à quartz permettant de fournir une base de temps au microcontrôleur et aussi à actionner un ou plusieurs moteur pas-à-pas faisant tourner des aiguilles d'affichage de l'heure et des éléments d'affichage analogiques d'un mécanisme d'une fonction horlogère de la montre telle que le quantième perpétuel ;
- un boitier fermé de part et d'autre par un cadran et fond de la montre ;
- un bracelet monté sur le boitier ;
- un affichage analogique comprenant donc des aiguilles en particulier trois aiguilles d'affichage respectivement de l'heure pour indiquer l'heure, de la minute et de la seconde ;
- un mécanisme de quantième perpétuel ;
- une interface de saisie telle qu'un écran tactile ou encore des boutons poussoirs, une couronne, etc...
- une unité d'alimentation telle qu'une pile ou une batterie permettant d'alimenter notamment le microcontrôleur.

Dans cette montre, le mécanisme de quantième perpétuel comprend un ensemble d'éléments, dont les éléments d'affichage de la date, du jour et du mois. Les éléments d'affichage sont de préférence des éléments d'affichage analogiques et comprennent par exemple deux aiguilles pour indiquer le jour et le mois, et un disque pour indiquer la date. On comprend donc que ces éléments d'affichage permettent d'indiquer le quantième (date), le jour, le mois, et éventuellement la phase de lune, en tenant compte automatiquement des différentes longueurs de mois et des années bissextiles. Plus précisément, un élément d'affichage tel qu'une aiguille permet de pointer une indication de date, jour, mois ou phase de lune inscrite sur le cadran de la montre, ou encore un élément d'affichage tel qu'un disque sur lequel des indications de date, jour, mois ou phases de lune sont inscrites, l'une de ces indications étant face à un guichet du cadran.

Le microcontrôleur de cette montre est apte à commander des moyens de positionnement des éléments du mécanisme de quantième perpétuel, notamment ces éléments d'affichage. Les moyens de positionnement des éléments du mécanisme de quantième perpétuel comprennent avantageusement un moteur ou plusieurs moteurs pas-à-pas. Le microcontrôleur est également connecté à des moyens de commande, ou interface de saisie, pouvant être une couronne, des poussoirs ou des plages tactiles, actionnables directement par le porteur de la montre. En outre, le module de communication en champ proche qui est relié au microcontrôleur, peut être positionné :
- sur le mouvement de la montre du côté fond ;
- sur une face supérieure visible d'un cadran de cette montre ou une face inférieure de ce cadran, notamment en étant agencé dans une cavité aménagée dans ce cadran ;
- sur une face supérieure visible d'un rehaut de la montre ou une face inférieure de ce rehaut, notamment en étant agencé dans une cavité aménagée dans ce rehaut ;
- dans l'épaisseur de ce cadran ;
- entre les cornes (vers le bracelet), ou sur le côté de la carrure, derrière un élément non métallique étanche, et
- dans ou sur une lunette de cette montre.

L'appareil électronique portable est un appareil électronique, aussi appelé terminal utilisateur, capable d'être porté et transporté par un utilisateur, et d'être fonctionnel lors de son transport. C'est le cas par exemple d'un smartphone, d'une phablette ou encore d'une tablette. Naturellement, les appareils nécessitant une alimentation secteur, par exemple les ordinateurs de bureau, sont exclus de cette définition. Les ensembles d'appareils, par exemple un ordinateur portable auquel est connecté par liaison sans fil ou filaire un capteur, sont également exclus de cette définition. Cet appareil électronique est utilisé pour transmettre à la montre les paramètres de réglage. Cet appareil électronique comprend un boitier dans lequel un circuit électronique est agencé. Ce circuit électronique comporte un microcontrôleur et un dispositif de communication en champ proche, tous deux alimentés par une batterie. L'appareil électronique peut également comprendre une caméra et une interface de saisie telle qu'un écran tactile ou encore des boutons. De plus, le microcontrôleur peut comporter dans ses éléments de mémoire un algorithme de reconnaissance optique pour participer à la détection d'informations comprises notamment dans le cadran de la montre à partir d'un traitement de données provenant de la caméra.

Le dispositif et le module de communication en champ proche mettent en œuvre par exemple des technologies de communication sans fil à courte portée et à haute fréquence de type NFC (acronyme pour « Near Field Communication » en langue anglaise signifiant « communication en champ proche »). Ce dispositif et ce module de communication fonctionnement selon des technologies qui sont différentes de la RFID et du Bluetooth. Ce dispositif et module de communication peuvent par exemple fonctionner dans les bandes de fréquences relatives aux hautes fréquences HF par exemple à 13,56 MHz.

Ce dispositif et module de communication permettent ainsi la réalisation d'échange de données à de courtes distances entre la montre et l'appareil électronique. De telles distances peuvent être comprises entre environ 0 et 10 cm, et de préférence entre 0 et 5 cm. Le module de communication de la montre peut être du type passif avec une énergie qui lui est fournie par les fréquences radio émises par le dispositif de communication de l'appareil électronique.

Plus précisément, le dispositif et le module de communication en champ proche comprennent chacun une puce électronique et au moins une antenne. La puce qui est connectée à ladite au moins une antenne, comprend des éléments matériels et logiciels. Dans ce contexte, les éléments matériels et/ou logiciels de la puce comportent plus précisément au moins un microprocesseur coopérant avec des éléments de mémoire. Le dispositif et le module de communication comprennent chacun un élément de support tel qu'un substrat en plastique ou en composites laminés sur lequel sont collées la puce et ladite au moins une antenne.

On notera que le module de communication de la montre peut comprendre un élément de blindage magnétique compris dans l'élément de support ou entre cet élément et la partie de la montre où il est destiné à être monté. Cet élément de blindage magnétique permet d'améliorer l'efficacité et la sensibilité de la réception/transmission de signaux radio par l'antenne du module communication en isolant ladite au moins une antenne des composantes métalliques de la montre comprises dans son environnement immédiat. Autrement dit, cet élément de blindage magnétique permet d'éviter une modification du champ magnétique émis ou reçu par le module de communication, modification qui serait due à la présence de diverses composantes métalliques de la montre situées dans l'environnement immédiat du module de communication. En complément, il est apte à pouvoir réduire l'influence négative que peuvent avoir ces composantes métalliques sur les performances du module de communication. Cette influence négative consisterait en l'atténuation du champ magnétique généré ou reçu par ce module de communication.

Dans ce contexte, le procédé permettant de réaliser le réglage de la montre est mis en œuvre par le système de réglage comprenant l'appareil électronique et la montre. Il permet notamment de régler en particulier un mécanisme de quantième perpétuel de cette montre et ce, par la réalisation d'un positionnement des éléments d'affichage dudit mécanisme. On peut d'ailleurs lorsque le contexte se rapporte au réglage de ce mécanisme de quantième perpétuel parler alors d'un procédé de réglage d'un mécanisme de quantième perpétuel de la montre à quartz.

Ce procédé comprend une étape d'établissement d'une connexion en champ proche 10 entre l'appareil électronique et la montre. Par *« champ proche »* il convient de comprendre ici que la connexion est réalisée selon la technologie NFC (acronyme de « Near Field Communication », pour communication en champ proche) et dans la mesure où la distance qui sépare l'appareil électronique et la montre est comprise entre 0 et 10 cm, de préférence entre 0 et 5cm. Cette étape 10 comprend lorsque le module de communication de la montre est situé sur le mouvement de la montre côté fond, une sous-étape de retrait 11 du fond de la boîte de montre de façon à découvrir le module de communication de la montre. Ce fond de la boite de montre à quartz est généralement amovible pour pouvoir changer l'unité d'alimentation de cette montre.

Cette sous-étape 11 n'est toutefois pas obligatoire et n'est d'ailleurs pas réalisée par exemple lorsque :
- le fond présente une portion transparente ou est réalisé dans un matériau partiellement transparent, ou
- le fond est non métallique, ou
- le module de communication est agencé sur une portion transparente du fond de la montre, ou
- le module de communication de la montre est agencé par exemple :
   ▪ dans une lunette de la montre ;
   ▪ entre les cornes (vers le bracelet), ou sur le côté de la carrure, derrière un élément non métallique étanche ;
   ▪ dans ou sur un cadran de la montre, et/ou
   ▪ dans ou sur un rehaut de cette montre.

Par la suite, cette étape d'établissement de connexion 10 comprend une sous-étape d'initiation 12, notamment automatique, d'une connexion entre la montre et l'appareil électronique dès lors que cette montre est localisée relativement à l'appareil électronique à une distance autorisant l'établissement d'une connexion en champ proche. Autrement dit, une telle sous-étape 12 peut être initiée manuellement ou automatiquement.

Lorsque cette sous-étape 12 est effectuée manuellement, on parle alors d'une sous-étape d'initiation manuelle 12 d'une connexion entre la montre et l'appareil électronique dès lors que cette montre est localisée relativement à l'appareil électronique à une distance autorisant l'établissement d'une connexion en champ proche. Dans ce contexte, la montre et l'appareil électronique sont agencés l'un par rapport à l'autre à une distance autorisant l'établissement d'une connexion en champ proche. Par la suite, le module de communication de la montre amorce un processus de connexion avec le dispositif de communication de l'appareil électronique, ou encore c'est le dispositif de communication de l'appareil électronique qui amorce ce processus de connexion avec le module de communication de la montre et ce, à la suite d'une interaction, selon le cas, entre l'utilisateur et une interface de saisie de la montre, ou l'utilisateur et une interface de saisie de l'appareil électronique.

Lorsque cette sous-étape 12 est effectuée automatiquement, la seule localisation de la montre relativement à l'appareil électronique à une distance autorisant l'établissement d'une connexion en champ proche, suffit pour amorcer le processus de connexion entre module de communication de la montre et le dispositif de communication de l'appareil électronique. Dans ce contexte on parle alors d'une sous-étape d'initiation automatique 12 d'une connexion entre la montre et l'appareil électronique dès lors que cette montre est localisée relativement à l'appareil électronique à une distance autorisant l'établissement d'une connexion. Dans cette configuration, cette sous-étape 12 participe donc à réaliser une connexion automatique, sans intervention de l'utilisateur sur la montre ou l'appareil électronique, entre cette montre et l'appareil électronique ainsi qu'à un réglage automatique de fonctions horlogères de cette montre de manière transparente pour cet utilisateur de ladite montre. On notera que cette sous-étape 12 peut comprendre une phase d'authentification entre le module et le dispositif de communication qui est transparente pour l'utilisateur. Autrement dit, une telle phase d'authentification ne requiert pas l'intervention de cet utilisateur. Dans ce contexte, des éléments d'authentification sont compris dans les éléments de mémoire du module et du dispositif de communication.

Une fois la connexion établit entre la montre et l'appareil électronique, le procédé comprend une étape de vérification 13 par le microcontrôleur de l'appareil électronique de l'exactitude d'une donnée d'état horlogère de la montre. Une telle donnée d'état horlogère est une donnée permettant de représenter un état au moins partiel de réglage de la montre. Il peut s'agir par exemple d'un fuseau horaire, d'un code pays, d'une alarme, d'une géolocalisation, d'une date, d'une marée, d'une phase de soleil ou de lune, d'une heure UTC, etc., réglé(e) sur la montre. Dans le cas où le procédé vise à régler ledit mécanisme de quantième perpétuel, la donnée d'état peut être relative à la date, au jour, au mois ou à l'année en cours (ou même à la phase de lune en cours lorsque le mécanisme de quantième perpétuel comprend un élément d'affichage de la phase de lune, par exemple une donnée relative à la géolocalisation, à l'hémisphère, au code pays, etc.), ladite donnée d'état représentant un état de réglage actuel du mécanisme de quantième perpétuel, par exemple une position d'un élément d'affichage dudit mécanisme.

Une telle étape de vérification 13 comprend une sous-étape de transmission 14 au module de communication de la montre par le dispositif de communication en champ proche et sur commande du microcontrôleur de l'appareil électronique contrôlant ledit dispositif de communication d'une instruction de récupération de la donnée d'état horlogère de la montre. Lors de cette sous-étape 14, un signal relatif à ladite instruction est alors généré par le microcontrôleur pour être transmis à ce dispositif de communication. Par la suite le dispositif de communication transmet alors cette instruction au module de communication de la montre.

Ensuite, l'étape de vérification 13 comprend à la suite de la réception de cette instruction par la montre, une sous-étape d'envoi 15 à l'appareil électronique par le module de communication en champ proche sur commande du microcontrôleur de la montre, de la donnée d'état horlogère caractérisant un réglage courant de la montre correspondant à des paramètres de réglage courant de cette montre. Lors de cette sous-étape 15, le microcontrôleur détermine la donnée d'état horlogère caractérisant un réglage courant d'un mécanisme relatif à une fonction horlogère telle que le quantième perpétuel. Dans le contexte du quantième perpétuel, la donnée d'état est relative à la date, au jour, au mois et à l'année en cours (et éventuellement à la phase de lune en cours lorsque le mécanisme de quantième perpétuel comprend un élément d'affichage de la phase de lune, par exemple des données relatives à une géolocalisation, un hémisphère, un code pays, etc.). Cette donnée d'état est suffisante pour représenter un état de réglage courant du mécanisme de quantième perpétuel, notamment la position des éléments d'affichage dudit mécanisme. Par la suite, le microcontrôleur génère alors un signal comprenant cette donnée d'état horlogère qui est transmise au module de communication. Par la suite, le module de communication de la montre envoi ainsi ladite donnée d'état au dispositif de communication.

Dans une alternative à ces sous étapes de transmission 14 et d'envoi 15, l'étape de vérification 13 peut prévoir une sous-étape de détermination 16 de la donnée d'état horlogère à partir d'un processus de lecture d'un cadran de la montre effectué par l'appareil électronique comprenant la caméra et d'un algorithme de reconnaissance optique exécuté par le microcontrôleur de l'appareil électronique. Une telle sous-étape 16 comprend alors une phase 17 visant à placer le cadran de la montre et la caméra de l'appareil électronique en vis-à-vis l'un de l'autre. Par « en vis-à-vis », on entend que le cadran et la caméra sont positionnés l'un par rapport à l'autre et à une distance telle que les aiguilles d'affichage de l'heure soient dans le champ de prise de vue de la caméra. Par la suite, cette sous-étape 16 comprend une phase de détection 18 des informations caractérisant un réglage courant de la montre qui sont comprises dans le cadran de cette montre et ce, au moyen de la caméra et de l'algorithme de reconnaissance optique de l'appareil électronique. Ensuite, cette sous-étape 16 comprend une phase d'estimation 19 de la donnée d'état horlogère à partir des informations détectées. Cette donnée d'état peut ici aussi caractériser un réglage courant du mécanisme de quantième perpétuel.

Par la suite, l'étape de vérification 13 comprend une sous-étape de comparaison 20 des données d'état avec des paramètres de réglage, ce afin de vérifier que le réglage du mécanisme de quantième perpétuel est correct. Ces paramètres de réglage sont par exemple récupérés régulièrement ou sur demande via un réseau Internet depuis l'appareil électronique. Par *« paramètre de réglage »,* on entend tout paramètre permettant de régler au moins en partie la montre. Il peut s'agir par exemple d'une information sur un quantième comme on l'a vu, mais également d'une information pouvant porter sur un fuseau horaire, un code pays, une alarme, une géolocalisation, une date, une marée, une phase de soleil ou de lune, une heure UTC, etc... On notera que lorsqu'il s'agit de paramètre de réglage du mécanisme de quantième perpétuel, on entend alors des informations relatives à la date, au jour, au mois et à l'année en cours (et éventuellement à la phase de lune en cours lorsque le mécanisme de quantième perpétuel comprend un élément d'affichage de la phase de lune, ces données étant alors par exemple une géolocalisation, un hémisphère, un code pays, etc.), ces informations étant suffisantes pour régler correctement le mécanisme de quantième perpétuel de la montre, notamment la position des éléments d'affichage de ce mécanisme.

Le procédé comprend ensuite une étape d'envoi 21 d'au moins une instruction de réglage au module de communication en champ proche de la montre. Cette instruction de réglage est envoyée par le dispositif de communication en champ proche et sur commande du microcontrôleur de l'appareil électronique et ce, dès lors que la donnée d'état horlogère est identifiée/estimée comme étant inexacte. Lors de cette étape 21, un signal de commande relatif à ladite instruction de réglage est généré par le microcontrôleur et ensuite transmis au dispositif de communication de l'appareil électronique. Ce signal de commande est tel qu'il correspond à un codage de paramètres de réglage du mécanisme de quantième perpétuel, c'est-à-dire à un codage d'un ensemble de données relatives au quantième, jour, mois et année en cours (et également à la phase de lune, le cas échéant). Ainsi que nous l'avons précédemment précisé, de tels paramètres de réglage sont par exemple récupérés régulièrement ou sur demande via un réseau internet depuis l'appareil électronique. On note que pour réaliser le codage, il est avantageux d'utiliser une application dédiée installée sur l'appareil électronique. Si l'appareil électronique est un smartphone ou une tablette tactile, cette application est avantageusement capable de générer le codage à partir des quantième, jour, mois, année et données de géolocalisation donnés par l'appareil électronique. Par la suite, cette instruction de réglage est alors transmise par le dispositif de communication au module de communication de la montre.

Le procédé comprend ensuite une étape de traitement 22 de ladite au moins une instruction reçue au moyen du microcontrôleur de la montre, afin de générer des paramètres de réglage de la montre. Lors de cette étape 22, le microcontrôleur traite ladite instruction afin d'obtenir le quantième perpétuel en cours.

Ensuite, le procédé comporte une étape de configuration 23 de la montre sur commande du microcontrôleur de la montre, selon les paramètres de réglage générés. Lors de cette étape 23, sur commande du microcontrôleur de la montre, cette étape 23 vise à prévoir un actionnement des moyens de positionnement des éléments du mécanisme de quantième perpétuel de façon à placer lesdits éléments dans une position correspondant aux paramètres de réglage obtenus lors de l'étape de traitement 22.

On comprendra que diverses modifications et/ou améliorations et/ou combinaisons évidentes pour l'homme du métier peuvent être apportées au mode de réalisation de l'invention exposée ci-dessus sans sortir du cadre de l'invention définie par les revendications annexées. Par exemple, l'étape de vérification 13 pourrait ne pas être effectuée, l'utilisateur traduisant lui-même la position des aiguilles d'affichage de l'heure en donnée exploitable.

De plus, même si la description détaille le réglage et la vérification du réglage d'un mécanisme de quantième perpétuel, d'autres réglages pourraient alternativement être effectués, par exemple le réglage d'un fuseau horaire, d'une heure, de marées, etc. Ces informations réglées ne sont d'ailleurs pas nécessairement affichées au niveau de la montre de manière analogique (par des aiguilles ou des disques, notamment), mais peuvent être affichées de manière numérique sur le cadran : l'étape de configuration 23 ne comporte donc pas nécessairement d'activation de moyens de déplacement d'éléments d'affichage analogiques.

## Revendications

1. Procédé de réglage d'une montre électronique, la montre comprenant un module de communication de type NFC et un microcontrôleur configuré pour échanger des signaux électriques avec ce module, le procédé étant réalisé au moyen d'un appareil électronique portable comprenant un dispositif de communication de type NFC et un microcontrôleur configuré pour commander ledit dispositif, **caractérisé en ce que** le procédé comprend les étapes suivantes :
- établissement d'une connexion de type NFC (10) entre l'appareil électronique et la montre ladite étape (10) comprenant, lorsque le module de communication de la montre est situé sur le mouvement de la montre côté fond, une sous-étape de retrait (11) du fond de la boîte de montre de façon à découvrir le module de communication de la montre, ladite étape d'établissement de connexion (10) comprenant une sous-étape d'initiation automatique (12) d'une connexion entre la montre et l'appareil électronique dès lors que cette montre est localisée relativement à l'appareil électronique à une distance autorisant l'établissement d'une connexion ;
- vérification (13) par le microcontrôleur de l'appareil électronique de l'exactitude d'une donnée d'état horlogère de la montre une fois la connexion établit entre la montre et l'appareil électronique, l'étape (13) comprenant à la suite d'une réception d'une instruction de récupération de la donnée d'état horlogère de la montre une sous-étape d'envoi (15) à l'appareil électronique par le module de communication de type NFC sur commande du microcontrôleur de la montre, de la donnée d'état horlogère caractérisant un réglage courant de la montre, ladite étape de vérification (13) comprenant une sous-étape de transmission (14) au module de communication de la montre par le dispositif de communication en champ proche et sur commande du microcontrôleur de l'appareil électronique contrôlant ledit dispositif de communication d'une instruction de récupération de la donnée d'état horlogère de la montre ;
- envoi (21) au module de communication de type NFC de la montre par le dispositif de communication de type NFC et sur commande du microcontrôleur de l'appareil électronique d'au moins une instruction de réglage de la montre dès lors que la donnée d'état horlogère est inexacte ;
- traitement (22) de ladite au moins une instruction reçue au moyen du microcontrôleur de la montre, afin de générer des paramètres de réglage de la montre, et
- configuration (23) de la montre sur commande du microcontrôleur de la montre, selon les paramètres de réglage générés.

2. Procédé de réglage selon la revendication précédente, dans lequel l'étape d'établissement de connexion (10) comprend une sous-étape d'initiation (12) d'une connexion entre la montre et l'appareil électronique dès lors que cette montre est localisée relativement à l'appareil électronique à une distance autorisant l'établissement d'une connexion.

3. Procédé de réglage selon l'une quelconque des revendications 1 à 2, dans lequel l'étape de vérification (13) comprend une sous-étape de comparaison (20) des données d'état avec des paramètres de réglage.

4. Procédé de réglage selon l'une quelconque des revendications précédentes, la montre comportant un mécanisme de quantième perpétuel et des moyens de positionnement d'éléments dudit mécanisme, le microcontrôleur de la montre étant configuré pour commander lesdits moyens de positionnement, l'étape de configuration (23) comprenant un actionnement des moyens de positionnement des éléments du mécanisme de quantième perpétuel de façon à positionner lesdits éléments dans une position correspondant aux paramètres de réglage.

5. Procédé de réglage selon l'une des revendications précédentes, l'appareil électronique étant un smartphone.

6. Système de réglage de la montre électronique mettant en œuvre le procédé selon l'une quelconque des revendications précédentes, le système comprenant un appareil électronique portable pourvu d'un dispositif de communication de type NFC et d'un microcontrôleur configuré pour commander ledit dispositif, la montre comprenant un module de communication de type NFC et un microcontrôleur configuré pour échanger des signaux électriques avec ce module, ladite montre et ledit appareil étant configurés pour être connectés de type NFC l'un à l'autre pour la réalisation du réglage de la montre.

## Patentansprüche

1. Verfahren zum Einstellen einer elektronischen Uhr, die Uhr umfassend ein Nahfeldkommunikationsmodul und einen Mikrocontroller, der eingerichtet ist, elektrische Signale mit diesem Modul auszutauschen, wobei das Verfahren mittels einem tragbaren elektronischen Gerät ausgeführt wird, das eine Nahfeldkommunikationsvorrichtung und einen Mikrocontroller umfasst, der eingerichtet ist, die Vorrichtung zu steuern, **dadurch gekennzeichnet, dass** das Verfahren die folgenden Schritte umfasst:
- Herstellen einer Nahfeldverbindung (10) zwischen dem elektronischen Gerät und der Uhr, der Schritt (10) umfassend, wenn sich das Kommunikationsmodul auf der Uhr auf dem Uhr-Uhrwerk auf der Rückseite befindet, einen Unterschritt des Entfernens, in dem die Rückseite des Uhrengehäuses entfernt wird (11), um das Kommunikationsmodul auf der Uhr freizulegen, wobei der Verbindungsherstellungsschritt (10) einen automatischen Initiierungsunterschritt (12) umfasst, in dem eine Verbindung zwischen der Uhr und dem elektronischen Gerät automatisch initiiert wird, sobald sich die Uhr in Bezug auf das elektronische Gerät in einem Abstand befindet, der ein Herstellen einer Verbindung ermöglicht;
- Verifizieren (13), mittels des Mikrocontrollers auf dem elektronischen Gerät, der Genauigkeit eines Bezugswerts des horologischen Zustands für die Uhr, sobald die Verbindung zwischen der Uhr und dem elektronischen Gerät hergestellt wurde, der Schritt (13) umfassend, nachdem eine Anweisung zum Abrufen des Bezugswerts des horologischen Zustands für die Uhr empfangen wurde, einen Sendeunterschritt (15), in dem der eine aktuelle Einstellung für die Uhr kennzeichnende Bezugswert des horologischen Zustands durch das Nahfeldkommunikationsmodul an das elektronische Gerät gesendet wird, wenn dies durch den Mikrocontroller auf der Uhr befohlen wird, wobei der Verifizierungsschritt (13) einen Übertragungsunterschritt (14) umfasst, in dem die Nahfeldkommunikationsvorrichtung eine Anweisung zum Abrufen des Bezugswerts des horologischen Zustands für die Uhr an das Kommunikationsmodul auf der Uhr überträgt, wenn dies durch den Mikrocontroller auf dem elektronischen Gerät, das die Kommunikationsvorrichtung steuert, befohlen wird;
- Senden (21), an das Nahfeldkommunikationsmodul auf der Uhr, mittels der Nahfeldkommunikationsvorrichtung und wenn dies durch den Mikrocontroller auf dem elektronischen Gerät befohlen wird, mindestens einer Anweisung zum Einstellen der Uhr, wenn der Bezugswert des horologischen Zustands nicht zutreffend ist;
- Verarbeiten (22) der mindestens einen Anweisung, die mittels des Mikrocontrollers auf der Uhr empfangen wird, um Uhreneinstellparameter zu erzeugen; und
- Konfigurieren (23) der Uhr, wenn dies von dem Mikrocontroller auf der Uhr befohlen wird, gemäß den erzeugten Einstellparametern.

2. Einstellverfahren nach dem vorhergehenden Anspruch, wobei der Verbindungsherstellungsschritt (10) einen Initiierungsunterschritt (12) umfasst, in dem eine Verbindung zwischen der Uhr und dem elektronischen Gerät initiiert wird, sobald diese Uhr relativ zu dem elektronischen Gerät in einem Abstand angeordnet ist, der ein Herstellen einer Verbindung ermöglicht.

3. Einstellverfahren nach einem der Ansprüche 1 bis 2, wobei der Verifizierungsschritt (13) einen Vergleichsunterschritt (20) umfasst, in dem die Daten des horologischen Zustands mit Einstellparametern verglichen werden.

4. Einstellverfahren nach einem der vorhergehenden Ansprüche, wobei die Uhr einen Dauerdatumsmechanismus und Mittel zum Positionieren von Elementen des Mechanismus umfasst, wobei der Mikrocontroller auf der Uhr eingerichtet ist, das Positioniermittel zu steuern, wobei der Konfigurationsschritt (23) das Betätigen des Mittels zum Positionieren der Elemente des Dauerdatumsmechanismus umfasst, um die Elemente in einer Position zu positionieren, die den Einstellparametern entspricht.

5. Einstellverfahren nach einem der vorhergehenden Ansprüche, wobei das elektronische Gerät ein Smartphone ist.

6. System zum Einstellen der elektronischen Uhr unter Verwendung des Verfahrens nach einem der vorhergehenden Ansprüche, das System umfassend ein tragbares elektronisches Gerät, das mit einer Nahfeldkommunikationsvorrichtung und einem Mikrocontroller versehen ist, der eingerichtet ist, die Vorrichtung zu steuern, die Uhr umfassend ein Nahfeldkommunikationsmodul und einen Mikrocontroller, der eingerichtet ist, elektrische Signale mit diesem Modul auszutauschen, wobei die Uhr und das Gerät so eingerichtet sind, dass sie im Nahfeld verbunden werden, um die Uhr einzustellen.

## Claims

1. A method for setting an electronic watch, the watch comprising a near-field communication module and a microcontroller configured to exchange electric signals with this module, the method being carried out by means of a portable electronic apparatus comprising a near-field communication device and a microcontroller configured to control said device, **characterised in that** the method comprises the following steps:
- establishing a near-field connection (10) between the electronic apparatus and the watch, said step (10) comprising, when the communication module on the watch is located on the watch movement on the back side, a removal substep in which the back of the watchcase is removed (11) so as to reveal the communication module on the watch, said connection establishment step (10) comprising an automatic initiation substep (12) in which a connection between the watch and the electronic apparatus is automatically initiated as soon as the watch is located relative to the electronic apparatus at a distance allowing a connection to be established;
- verifying (13), by means of the microcontroller on the electronic apparatus, the accuracy of a horological state datum for the watch once the connection has been established between the watch and the electronic apparatus, the step (13) comprising, after an instruction to retrieve the horological state datum for the watch has been received, a sending substep (15) in which the horological state datum characterising a current setting for the watch is sent to the electronic apparatus by the near-field communication module when instructed to do so by the microcontroller on the watch, said verification step (13) comprising a transmission substep (14) in which the near-field communication device transmits an instruction to retrieve the horological state datum for the watch to the communication module on the watch when instructed to do so by the microcontroller on the electronic apparatus controlling said communication device;
- sending (21), to the near-field communication module on the watch, by means of the near-field communication device and when instructed to do so by the microcontroller on the electronic apparatus, at least one instruction for setting the watch if the horological state datum is inaccurate;
- processing (22) said at least one instruction received by means of the microcontroller on the watch, in order to generate watch setting parameters; and
- configuring (23) the watch when instructed to do so by the microcontroller on the watch, according to the setting parameters generated.

2. The setting method according to the preceding claim, in which the connection establishment step (10) comprises an initiation substep (12) in which a connection is initiated between the watch and the electronic apparatus as soon as this watch is located relative to the electronic apparatus at a distance allowing a connection to be established.4..

3. The setting method according to any of claims 1 to 2, in which the verification step (13) comprises a comparison substep (20) in which the horological state data are compared with setting parameters.

4. The setting method according to any of the preceding claims, the watch comprising a perpetual date mechanism and means for positioning elements of said mechanism, the microcontroller on the watch being configured to control said positioning means, the configuration step (23) comprising actuating the means for positioning the elements of the perpetual date mechanism so as to position said elements in a position that corresponds to the setting parameters.

5. The setting method according to any of the preceding claims, the electronic apparatus being a smartphone.

6. A system for setting the electronic watch using the method according to any of the preceding claims, the system comprising a portable electronic apparatus provided with a near-field communication device and a with microcontroller configured to control said device, the watch comprising a near-field communication module and a microcontroller configured to exchange electric signals with this module, said watch and said apparatus being configured to be connected, in the near field, with each other to set the watch.
